# EUROPEAN PATENT SPECIFICATION

(11) **EP 1 545 858 B1**
(45) Date of publication and mention of the grant of the patent: **13.09.2006**
(21) Application number: 03772198.2
(22) Date of filing: 28.07.2003
(51) Int. Cl.: B29C 45/16, B29C 65/70, B29C 45/14, F16L 9/22, F16L 47/06

(54) **METHOD FOR INJECTION MOLDING MULTI-LAYER PLASTIC PRODUCTS AND MULTI-LAYER PLASTIC PRODUCTS THEREOF**
VERFAHREN ZUM SPRITZGIESSEN VON MEHRLAGIGEN KUNSTSTOFFPRODUKTEN UND MEHRLAGIGES KUNSTSTOFFPRODUKT DARAUS
PROCEDE DE MOULAGE PAR INJECTION D'ARTICLES EN PLASTIQUE MULTICOUCHE, ET ARTICLES EN PLASTIQUE MULTICOUCHE CORRESPONDANTS

(30) Priority: 30.07.2002 YU 57102; 22.07.2003 YU 57703
(43) Date of publication of application: 29.06.2005
(73) Proprietor: Pesovic, Predrag, YU-11000 Belgrad (YU); Pesovic, Vojin, YU-11000 Belgrad (YU)
(72) Inventor: Pesovic, Predrag, YU-11000 Belgrad (YU); Pesovic, Vojin, YU-11000 Belgrad (YU)
(74) Representative: Forsthuber, Martin
(86) International application number: PCT/YU2003/000020
(87) International publication number: WO 2004/011225

(56) References cited:
- EP-A- 0 681 898
- EP-A- 1 277 556
- DE-A- 4 141 393
- US-A1- 2001 018 105
- PATENT ABSTRACTS OF JAPAN vol. 1999, no. 04, 30 April 1999 (1999-04-30) -& JP 11 022889 A (C I KASEI CO LTD), 26 January 1999 (1999-01-26)

## Description

### Technical field

The invention refers to the processing and treatment of plastic mass and materials in the plastic state. It also covers multi-layer products.

### Technical problem

This invention solves the problem of multi-layer injection molding of articles having good mechanical properties, such as impact-resistance, scratch-resistance, resistance to breakage, good aesthetic and decorative attributes such as high surface gloss or soft to the touch, and being economic to produce.

### State of art

Prior art documents reflecting the technical field of the invention are:

US Patents:
1. 3,947,177 - 06/09/1974 - Apparatus For Injection Molding Of Multi-Layer Bodies Of Thermoplastic;
2. 4,840,553 - 20/09/1988 - Metal Mold Structure For Molding Multi-Layer Resin;
3. 4,931,246 - 19/09/1986 - Method For Injection Molding Multi-Layer Articles;
4. 5,141,695 - 08/09/1987 - Injection Molding Method For Multi-Layer Bottomed Parisons;
5. 5,667,819 - 04/11/1994 - Apparatus For Injection Molding Of Multi-Layer Objects;
6. 5,851,456 - 28/03/1997 - Method For Manufacturing A Multi-Layer Product;
7. 6,129,960 - 10/10/2000 - Methods And Apparatus For Injection Molding And Injection Blow Molding Multi-Layer Plastic And Articles Made Thereby;

EP Patent:
1. EP 1 227 556 A1 Method for producing, by injection moulding, a plastic body provided with localized protuberances. Document EP 1 227 556 A1 discloses a process in accordance with the preamble of claim 1.

All the stated documents refer to an apparatus and processes for simultaneous injection molding of multi-layer materials. Such a manner of molding the multi-layer materials employs extremely complex devices and molds, and complex multi-tube nozzles. Furthermore, it requires extremely complex control of viscosity, flow and temperature of materials that are being molded in various layers, which all makes the whole process even more complex, thus tending to be imprecise, ineffective and uneconomic. Some of the named processes include a combination of both injection molding and blow molding.

Generally, they all allow injection molding or blow molding of several layers of various materials, whose wall thickness is mainly uniform. In all the previously named technologies it is practically impossible to increase the cross-section (thickness of the multi-layer wall) from several times up to several dozens times , without compromising technical and technological requirements of the process, which are defined by technical openings dimensions, if any, parts dimensions, aesthetics, mechanical properties, uniformity of density of material by layers, and plastic mass processing technology (processing and cooling time of injection molded layers).

### Disclosure of the invention

This invention refers to the procedure of injection molding multi-layer plastic products. Technological procedure is defined in regards to the materials and their combinations in layers, depending on the sanitary - technical requirements in water-sanitary fixtures. The said application also refers to other technical and technological elements and finished products not in use in manufacturing process of water-sanitary products technology, but which are subject to strict and precise technical and technological requirement the invention is defined by the features of claim 1.

According to this invention, the procedure is defined in successive injection molding of a (either thin or thick) layer upon already molded layer(s), and the first layer is injection molded in a mold with a solid core, if the part has closed structure, or without a core, if the part has an open structure. This procedure allows injection molding of 'n' layers, depending on the technical and technological requirements set for the final product.

Construction of the product itself is defined by a number of layers and their thickness, constructive bond between them (contact surface), quality (roughness) of the contact surface between the layers and construction of the first layer, depending on the requirements set for the final product.

When closed product structures are in question, they usually have complicated shapes, which require hermetic (sealing and water-tight) properties, so the first layer must be made in segments, which are joined in several ways and then over-molded with another layer, and in another mold. Furthermore, we should emphasize that the invention opens up unlimited possibilities in meeting the most difficult technical, technological, and sanitary requirements, where the thickness of an individual layer, or the whole product, is practically unlimited, while never compromising technical and technological requirements defined by technical openings dimensions, if any, parts dimensions, aesthetics, mechanical properties, uniformity of density of material by layers, and plastic mass processing technology (processing and cooling time of injection molded layers).

### Detailed description of the invention

The invention is described in detail in enclosed figures:
- Fig. 1- closed structure multi-layer product cross-section;
- Fig. 2 - open structure multi-layer product cross-section;

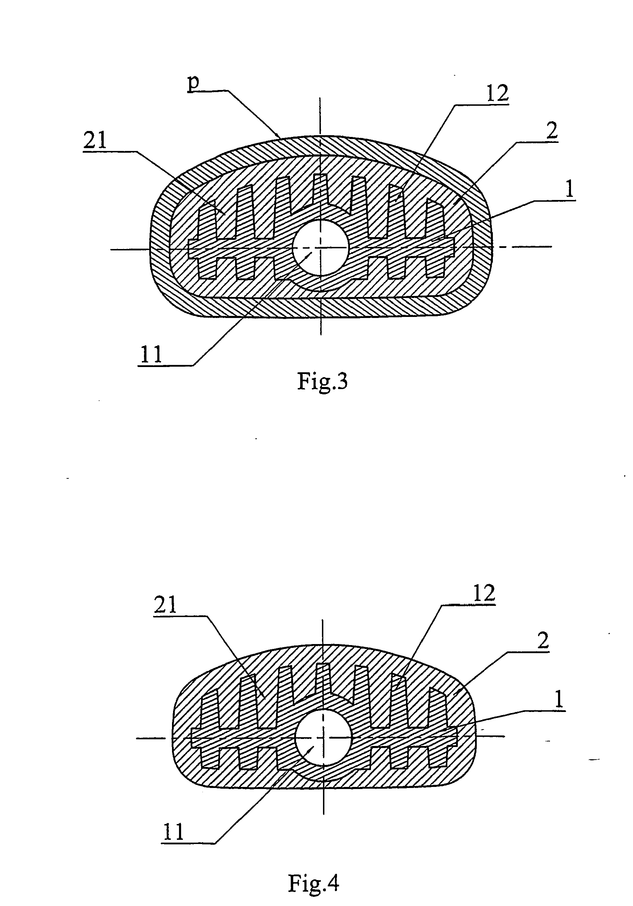

- Fig. 3 - three-layer product cross-section;
- Fig. 4 - two-layer product cross-section;
- Fig. 5 ÷ 8 - cross-sections of thin layers with protruding, indented and smooth surface;
- Fig. 9 ÷ 12 - cross-sections of thick layer with ribbed structure (grooves in between the ribs);
- Fig. 13 ÷ 28 - some of the possible shapes of protrusions and indentations in thin and thick layers and their surface positioning;
- Fig. 29 - ribbed structure with straight ribs;
- Fig. 30 - ribbed structure with circular ridges;
- Fig. 31 - net-like ribbed structure;
- Fig. 32 - cross-section of a product with the first layer elements joined with an 'O' ring, and
- Fig. 33 - cross-section of a product with the first layer elements joined without an 'O' ring.

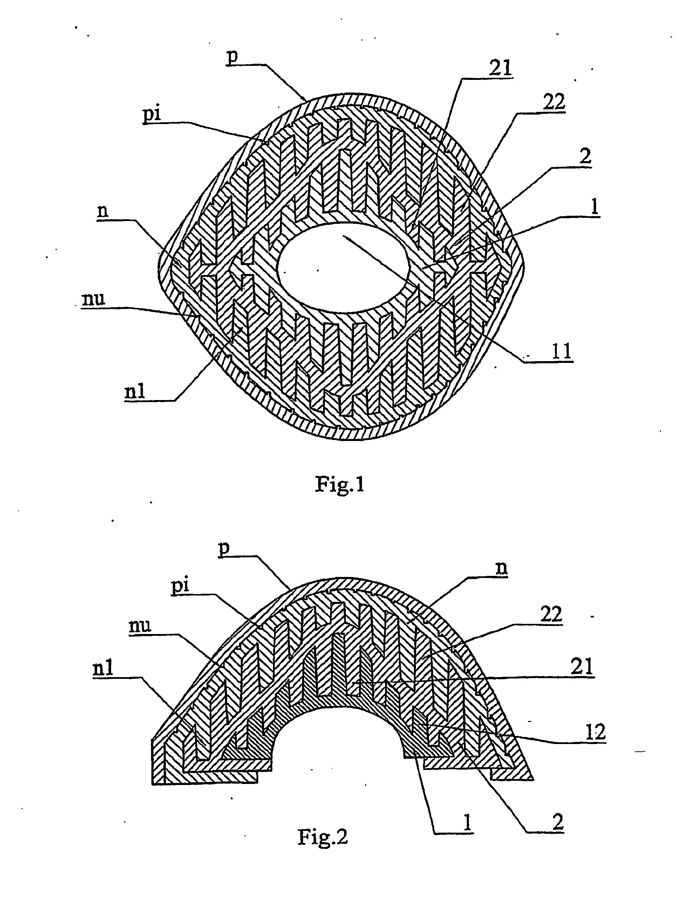

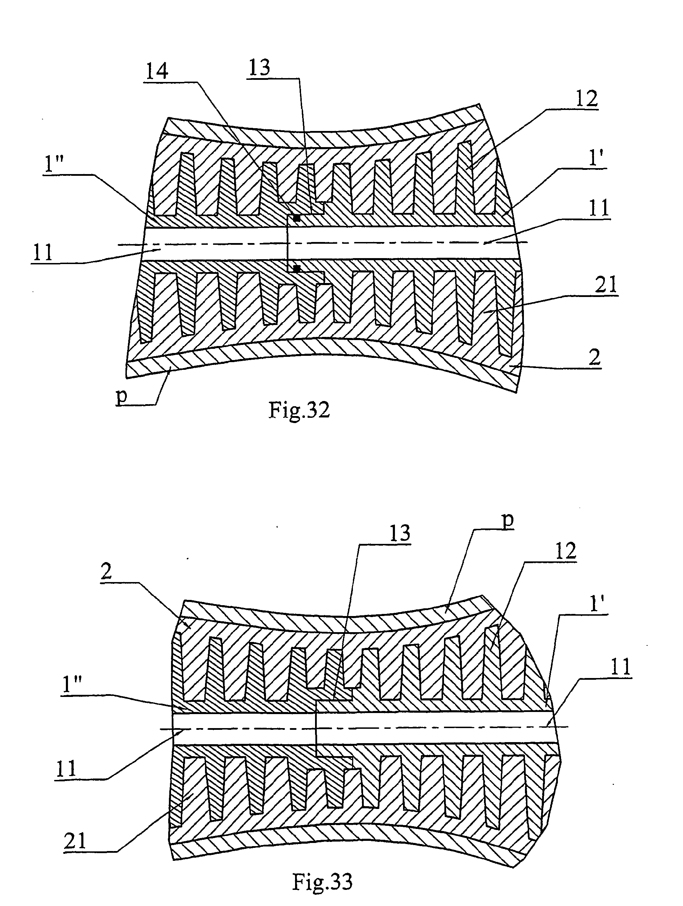

The injection moulding process for multilayer plastic products is carried out in such way that first layer 1, more exactly segments 1' and 1" thereof are formed first by injection moulding, disregarding if the product concerned is having a closed structure (Figs. 1 and 32). Ribbed projections 12 are formed on the outer surface of the first layer 1. In each of the segments 1' and 1" a hole 11 is formed using a stiff core in the die or by any other means, which hole 11 is the most often intended for fluid flowing therethrough, that implies it has to be made of fluid-tight material, as well as the above mentioned segments 1' and 1" have to be joined hermetically. For that purpose they are interconnected either by releasable or non-releasable connection, but it must be hermetical in any case. The releasable connection between the segments 1' and 1" is realized by means of a sleeve 13 having either an appropriate groove into an O - ring is mounted or snap fasteners (not shown in drawings); the non-releasable connection is provided via the sleeve 13 by means of gluing, heating, press fit or ultrasonic welding.

The first layer 1 formed in such way that consists a support for product to be made is being positioned very precisely in another die and onto the outer surface thereof a second layer is formed by injection moulding, whose ribbed projections 21 fill the cavities between the ribbed projections 12 of the first layer 1. The ribbed projections 22 of the second layer 2 protrude from the outer surface of the second layer 2. The first and second layers /1 and 2/ that form an integral part now are being positioned in an another die where is carried out injection moulding of the third layer 'n' having the ribbed projections 'n1' and the recesses 'nu' on the outer surface thereof. The protrusions n1 of the third layer'n' fill the cavities between the ribbed projections '22' of the second layer '2'. Over the layer 'n' a decorative layer 'p' is formed by injection moulding, whose protrusions 'pi' engage the recesses 'nu' of the layer 'n' forming in such way a homogeneous structure between the third layer 'n' and the decorative layer 'p'.

The outer surface of the decorative layer "p" can be arbitrary coloured or it can be transparent, and in respect to the quality, said surface can be smooth as polished or rough, more exactly in the form of a profile with desired pattern.

If the product concerned has an open structure (Fig. 2), the injection moulding process is same as explained above, except that the first layer (1) is not formed of the segments 1' and I", but integrally and one of its surfaces can have final quality in the case if it should not be covered by the second layer.

The layers 1 to 'n' can be formed either as thin layers "ts" or as thick layers "ds", as well as a combination thereof, while the decorative layer 'p' is preferably formed as a thin layer. Thickness of the thin layer "ts" varies within a range between 0.5 and 6 mm, while thickness of the thick layers varies within a range between 4 and 30 mm.

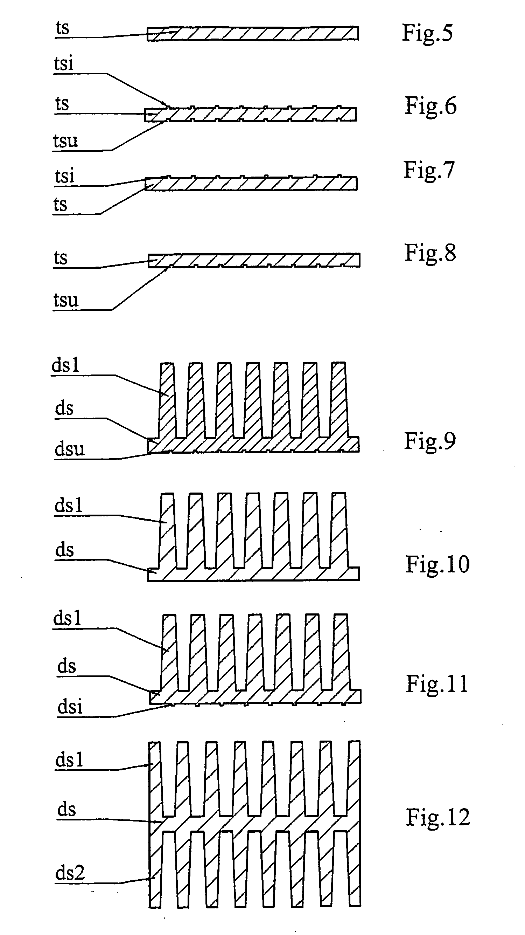

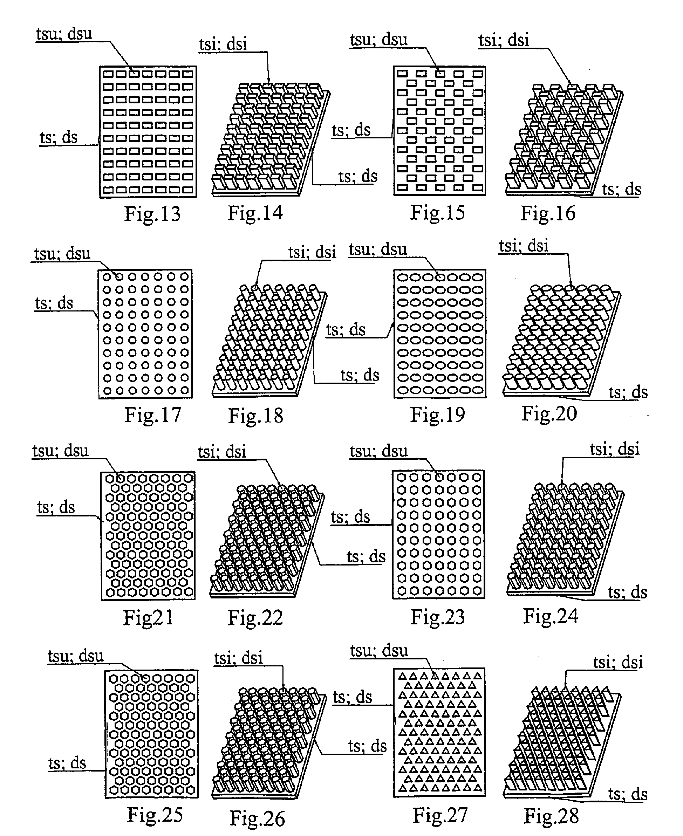

The surfaces of the thin layers "ts" can be smooth or having protrusions "tsi" and recesses "tsu" or ribbed projections or any combination thereof with the smooth surfaces. The protrusions "tsi" and the recesses "tsu" (Fig. 6) have circular, square or any other suitable geometrical shape, while they can be placed either in checkered arrangement or in any other suitable symmetrical or asymmetrical arrangement (Figs 13-28).

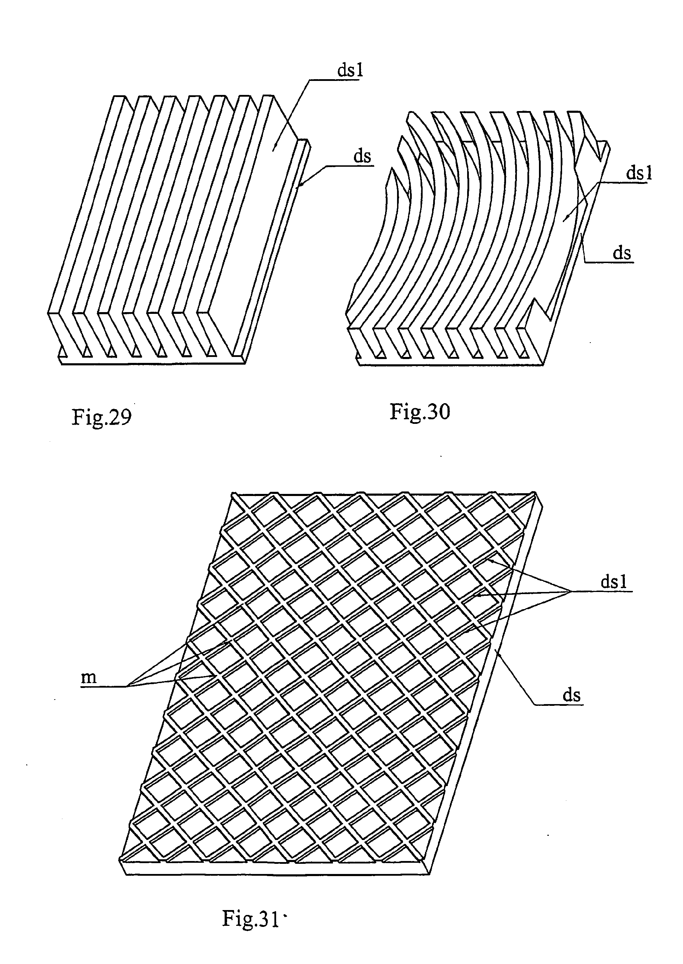

The surfaces of the thick layers "ds" can be smooth or having protrusions "dsi" and recesses "dsu" or ribbed projections "ds1", "ds2" (Figs. 9 - 12) or any combination thereof with the smooth surfaces, wherein their cross-sections have square, rectangular, triangular, trapezoid, semicircular or any other suitable geometrical shape. They can be arranged on the surfaces of the layers 1 to n in a form of parallel ribs that can be either straight or convex, or they can form a web "m" or any other suitable arrangement (Figs. 29 - 31).

It will be apparent from the foregoing that the process according to the present invention provides a wide range of possibilities of the production of the multilayer products,

## Claims

1. Injection molding process for producing multilayered plastic products with an open or closed structure, preferably for sanitary products, whereby a first layer (1) with ribbed projections (12) is first formed by injection molding, then the first layer (1) is placed in another die whereby a second layer (2) is injection molded on the entire surface of the first layer (1) or a part thereof whereby the ribbed projections on the inner side (21) of the second layer (2) engage between the ribber projections (12) of the first layer; **characterized in that** the second layer (2) is formed with ribbed projections (21, 22) on both sides thereof, then the second layer (2) overmolded on the first layer (1) is placed in a further die and a third layer (n) is formed by multistep injection molding, while the ribbed projections thereof (n1) fill the cavities between the ribbed projections (22) of the outer surface of the second layer (2) and further recesses (nu) are formed on the outer surface of the third layer (n); and then the structure so obtained is placed in a final die whereby a finishing layer (p) is injection molded having protrusions (pi) which engage the recesses (nu) of the third layer (3).

2. Process according to claim 1, **characterized in that** the first layer (1) consists of the segments (1',1") that are interconnected, releasably by means of a sleeve (13) with O - ring (14), or non-releasably in a zone of the outer surface of the sleeve (13) by gluing, heating, press fit or ultrasonic welding.

## Patentansprüche

1. Spritzguss-Verfahren zum Erzeugen mehrlagiger Kunststoffprodukte mit offener oder geschlossener Struktur, vorzugsweise für Sanitärprodukte, bei welchem zuerst eine erste Lage (1) mit gerippten Fortsätzen (12) durch Spritzgießen geformt wird, dann die erste Lage (1) in eine andere Spritzform platziert wird, wobei eine zweite Lage (2) auf der gesamten Oberfläche der ersten Lage (1) oder einem Teil davon spritzgegossen wird, wobei die gerippten Fortsätze auf der Innenseite (21) der zweiten Lage (2) zwischen den gerippten Fortsätzen (12) der ersten Lage eingreifen, **dadurch gekennzeichnet, dass** die zweite Lage (2) mit gerippten Fortsätzen (21, 22) an ihren beiden Seiten geformt wird; dann wird die über die erste Lage (1) gegossene zweite Lage (2) in eine weitere Spritzform platziert und eine dritte Lage (n) durch Mehrschritt-Spritzgiessen geformt, während deren gerippten Fortsätze (n1) die Hohlräume zwischen den gerippten Fortsätzen (22) der Außenseite der zweiten Lage (2) füllen, und weitere Vertiefungen (nu) werden and der Außenfläche der dritten Lage geformt; und dann wird die so erhaltene Struktur in eine Endspritzform platziert, wobei eine Endschicht (p) spritzgegossen wird mit Vorsprüngen (ni), die in die Vertiefungen (nu) der dritten Schicht eingreifen.

2. Verfahren nach Anspruch 1, **dadurch gekennzeichnet, dass** die erste Schicht (1) aus den Segmenten (1',1") besteht, die miteinander lösbar mithilfe einer Hülse (13) mit einem O-Ring (14), oder unlösbar in einem Bereich der Außenfläche der Hülse (13) durch Kleben, Heizen, Presspassung oder Ultraschallschweißen verbunden sind.

## Revendications

1. Procédé de moulage par injection pour produire des produits en plastique multicouche à structure ouverte ou fermée, de préférence pour des produits sanitaires, moyennant quoi une première couche (1) à projections nervurées (12) est tout d'abord formée par moulage par injection, puis la première couche (1) est placée dans une autre filière moyennant quoi une deuxième couche (2) est moulée par injection sur toute la surface de la première couche (1) ou sur une partie de celle-ci, moyennant quoi les projections nervurées du côté interne (21) de la deuxième couche (2) s'engagent entre les projections nervurées (12) de la première couche, **caractérisé en ce que** la deuxième couche (2) est formée avec des projections nervurées (21, 22) de ses deux côtés ; puis la deuxième couche (2) surmoulée sur la première couche (1) est placée dans une autre filière et une troisième couche (n) est formée par moulage par injection à plusieurs étapes, tandis que ses projections nervurées (n1) remplissent les cavités entre les projections nervurées (22) de la surface externe de la deuxième couche (2) et d'autres évidements (nu) sont formés sur la surface externe de la troisième couche (n) ; et ensuite, la structure ainsi obtenue est placée dans une filière finale moyennant quoi une couche de finition (p) est moulée par injection ayant des parties saillantes (pi) qui s'engagent dans les évidements (nu) de la troisième couche (3).

2. Procédé selon la revendication 1, **caractérisé en ce que** la première couche (1) consiste en les segments (1', 1") qui sont interconnectés de façon démontable au moyen d'un manchon (13) à joint torique (14), ou de façon non démontable dans une zone de la surface externe du manchon (13) par collage, chauffage, fixation par compression ou soudage par ultrasons.
